# EUROPÄISCHE PATENTSCHRIFT

(11) **EP 1 801 495 B1**
(45) Veröffentlichungstag und Bekanntmachung des Hinweises auf die Patenterteilung: **06.10.2010**
(21) Anmeldenummer: 06026680.6
(22) Anmeldetag: 22.12.2006
(51) Int. Cl.: F21V 21/02, F16B 5/10

(54) **Haltevorrichtung für Bauteile**
Supporting device for a component part
Dispositif de maintien pour un élément de construction

(30) Priorität: 22.12.2005 DE 102005061580
(43) Veröffentlichungstag der Anmeldung: 27.06.2007
(73) Patentinhaber: Siteco Beleuchtungstechnik GmbH, 83301 Traunreut (DE)
(72) Erfinder: Zahnbrecher, Helmut, 83349 Palling (DE); Niedermaier, Ludwig, 83123 Amerang (DE)
(74) Vertreter: Schohe, Stefan

(56) Entgegenhaltungen:
- EP-A- 0 813 027
- DE-A1- 4 334 413
- DE-U1- 29 519 800

## Beschreibung

Die vorliegende Erfindung betrifft allgemein die Befestigung von Bauteilen, wie Montageschienen, Leuchteneinsätzen, und Reflektoren aneinander und insbesondere eine Verschlußtechnik für ein Schienensystem.

Bei bisher bekannten Befestigungsvorrichtungen für Leuchteneinsätze an Montageschienen, wie beispielsweise bei Lichtbandanordnungen, wird der Leuchteneinsatz, von unten an eine an der Decke montierte oder von dort abgehängte Montageschiene gehalten und durch Drehen eines oder mehrerer am Leuchteneinsatz angeordneter Drehriegel an der Montageschiene fixiert. Als nachteilig wird dabei häufig empfunden, daß die Befestigung zwei gleichzeitig durchzuführende Tätigkeiten, d.h. das Halten des Leuchteneinsatzes an der Montageschiene und das Drehen des Drehriegels in eine Verschlußposition, erfordert. Dies kann insbesondere bei schweren Bauteilen schwierig sein, da jeweils nur eine Hand zum Halten des Bauteils an der Montageschiene und zum Drehen des Drehriegels zur Verfügung steht.

In der europäischen Patentanmeldung 0 621 444 A1 wird ein demgegenüber verbesserter an einem Leuchteneinsatz zu befestigender Schnellverschluß offenbart, der durch Andrücken an ein Montageschienenprofil montiert wird. Dabei verdreht sich der Schnellverschluß bei gleichzeitiger Erzeugung einer Federvorspannung um einen vorgegebenen Winkelbereich und schnellt unter Ausnützung der Federvorspannung zurück, sobald der Leuchteneinsatz an der Montageschiene richtig aufsitzt.

Der bekannte Schnellverschluß läßt eine vereinfachte Montage eines Leuchteneinsatzes an einer Montageschiene zu, umfaßt jedoch eine größere Zahl komplizierter Einzelteile, wodurch die Herstellungskosten erhöht sind.

EP 0 813 027 A2 offenbart eine Tragschienenleuchte gemäß dem Oberbegriff von Anspruch 1 Ein Leuchteneinsatz wird mittels einer Rastverbindung an einer Tragschiene befestigt. Die Rastverbindung erfolgt durch Rastnasen an einem Federelement des Leuchteneinsatzes. Die Rastnasen können selbständig in die Trägerschiene einrasten und durch Drehen einer Drehhalterung wieder ausgerückt werden.

Es ist daher die Aufgabe der vorliegenden Erfindung, eine kostengünstige Haltevorrichtung, ein entsprechendes, eine Haltevorrichtung und ein ein Bauteil umfassendes System sowie ein Verfahren bereitzustellen, die eine erleichterte Montage von Bauteilen, insbesondere von Leuchteneinsätzen und Reflektoren an einer Montageschiene zulassen.

Diese Aufgabe wird gelöst durch eine Haltevorrichtung mit den Merkmalen des Anspruchs 1, ein System mit den Merkmalen des Anspruchs 13 und ein Verfahren mit den Merkmalen des Anspruchs 17.

Vorteilhafte Ausführungsformen der Erfindung sind in den Unteransprüchen angegeben.

Erfindungsgemäß wird eine Haltevorrichtung zur Befestigung von Bauelementen, wie beispielsweise Leuchteneinsätzen, Reflektoren und Montageschienen bereitgestellt, die zumindest ein Halteelement und ein mit dem Halteelement zusammenwirkendes und relativ dazu bewegbares Steuerelement umfaßt, welches so betätigt werden kann, daß das Halteelement zwischen zumindest zwei Positionen verstellt wird.

Die Positionen des Halteelements entsprechen vorzugsweise unterschiedlichen Verriegelungs- und Entriegelungszuständen des Halteelements bzw. der Haltevorrichtung mit einem entsprechenden komplementären Bauteil, wie z.B. einer Montageschiene. Denkbare Einstellpositionen sind beispielsweise eine vollständig verriegelte Position, in der die Haltevorrichtung mit dem entsprechenden Bauteil fest verbunden ist, eine entriegelte Position, in der das Halteelement bzw. die Haltevorrichtung vom Bauteil getrennt ist, und eine teilweise verriegelte Halteposition, in der die Haltevorrichtung über eine Rastverbindung mit dem Bauteil verbunden ist, so daß ein Halten des Bauteils nicht mehr erforderlich ist, es jedoch noch nicht endgültig daran fixiert ist. Ein Vorteil der erfindungsgemäßen Haltevorrichtung besteht somit darin, daß damit nicht nur eine vollständig verriegelte bzw. entriegelte Position des Halteelements bzw. der Haltevorrichtung, sondern auch eine oder gegebenenfalls mehrere dazwischen liegende Positionen, eingestellt werden können. Die erfindungsgemäße Haltevorrichtung umfaßt eine geringe Zahl von Einzelteilen und kann kostengünstig hergestellt werden.

Gemäß einer bevorzugten Ausführungsform umfaßt das Steuerelement eine mit dem Halteelement in Eingriff stehende Führungseinrichtung, durch deren Form die Bewegung bzw. die Position des Halteelements gesteuert wird. Durch die Form können beispielsweise Rastpositionen definiert und kann der Verlauf festgelegt werden, gemäß dem das Halteelement durch Betätigen des Steuerelements zwischen Positionen verstellt wird.

Bevorzugt handelt es sich bei dem Steuerelement um eine relativ zum Halteelement verstellbare Scheibe, insbesondere eine Exzenterscheibe. Die Führungseinrichtungen können bei der Scheibe durch Randoberflächen oder auch durch Einschnitte, Schlitze oder Nuten in der Scheibe gebildet werden. Es ist denkbar, die Scheibe so anzuordnen, daß sie relativ zum Halteelement drehbar oder auch verschiebbar angeordnet ist. Die Führungsfläche bzw. der Schlitz kann beispielsweise eine Spiralform, eine elliptische, geradlinige oder sonstige geeignete Form aufweisen.

Gemäß einer bevorzugten Ausführungsform ist das Steuerelement drehbar am Trägerelement befestigt und weist zumindest eine exzentrisch angeordnete, als Führungsfläche oder Führungsschlitz ausgebildete Führungseinrichtung auf, mit der das Halteelement in Eingriff steht. Der Schlitz kann sich über einen Teil des Umfangs der Scheibe, wie z.B. über 270°, jedoch auch über einen geringeren Winkel von 180° oder über den gesamten Umfang (360°) oder über mehr als diesen erstrecken.

Vorzugsweise weist der Führungsschlitz eine über seine Länge variierende Breite auf. Dadurch ist es beispielsweise möglich abhängig von der Position des Halteelements im Führungsschlitz einen Bewegungsspielraum des Halteelements senkrecht zum Schlitz zuzulassen oder zu verhindern. Ein Bewegungsspielraum kann zweckmäßiger Weise an Positionen, in welchen das Halteelement senkrecht zum Schlitz aus seiner Position ausgelenkt werden muß, um beispielsweise eine Rastverbindung zu realisieren, vorgesehen sein.

Gemäß einer weiteren bevorzugten Ausführungsform ist das Halteelement mit einer Feder beaufschlagt oder aus einem elastischen Material, insbesondere aus Metall oder einer Metalllegierung, hergestellt. Damit kann das Halteelement vorzugsweise in allen Einstellpositionen des Steuerelements mit der Führungseinrichtung des Steuerelements in Eingriff und in Anlage gegen diese gehalten werden, so daß die durch die Führungseinrichtung definierten Positionen unmittelbar und zuverlässig auf das Halteelement übertragen werden.

Bevorzugt ist das Halteelement aus einem Stück mit der Haltevorrichtung hergestellt. Gemäß einer weiteren bevorzugten Ausführungsform weist das Steuerelement zumindest eine und bevorzugt mehrere Rastposition für das Halteelement auf. Denkbar wäre es jedoch auch, alternativ das Halteelement mit einer oder mehreren Rastpositionen für das Steuerelement auszustatten, sofern dies zweckmäßig ist und sich der Aufbau der Haltevorrichtung dazu eignet. Durch Rastpositionen können bestimmte gewünschte Einstellungen des Steuerelements relativ zum Halteelement vordefiniert und reproduzierbar eingestellt werden. Darüber hinaus kann ein unbeabsichtigtes selbständiges Verstellen des Steuerelements vermieden werden.

Gemäß einer weiteren bevorzugten Ausführungsform weist das Halteelement einen mit dem Steuerelement in Eingriff stehenden Führungsarm auf. Der Führungsarm überträgt die durch das Steuerelement eingestellte Position auf das Halteelement und kann ggf. mit Hilfe eines in geeigneter Weise an den Führungsschlitz angepaßten Querschnitts zusätzlich ein widerstandsfreies Verstellen des Steuerelements unterstützen.

Gemäß noch einer weiteren Ausführungsform weist die Haltevorrichtung ein U-förmiges Profil auf, dessen Arme bzw. Seiten jeweils ein als Federschenkel ausgebildetes Halteelement aufweisen, wobei zwischen den Halteelementen das Steuerelement angeordnet ist. Des weiteren können die Federschenkel an ihren Enden mit Auflaufflächen ausgestattete Rastelemente aufweisen, die der Herstellung einer Rastverbindung mit einem entsprechend hergestellten Bauteil, wie z.B. einer Montageschiene, dienen. Zum Befestigen der Haltevorrichtung an der Montageschiene werden die Auflaufflächen der Rastelemente, die zweckmäßiger Weise einen größeren Abstand als die Ränder der Montageschiene aufweisen, gegen die Montageschiene gedrückt, wobei sie zusammengepreßt werden. Bein Einrasten in der Montageschiene bewegen sie die Rastelemente jeweils wieder nach außen, so daß eine Rastfläche jedes Rastelements über dem Innenrand der Tragschiene zu liegen kommt.

Gemäß noch einer anderen Ausführungsform weist die Haltevorrichtung und insbesondere das Steuerelement an einem Ende einen damit verbundenen Drehriegel auf, mit Hilfe dessen ein mit einer dem Drehriegel entsprechenden Öffnung versehenes Leuchtenbauteil oder sonstiges Bauteil an der Haltevorrichtung befestigt werden kann. Durch Drehen des Steuerelements können dann verschiedene Positionen des Halteelements eingestellt und kann gleichzeitig eine Verbindung mit einem weiteren vorzugsweise in entgegengesetzter Richtung zum Halteelement an der Haltevorrichtung bzw. am Steuerelement angeordneten Bauteil hergestellt werden.

Bei der in der vorliegenden Beschreibung genannten Haltevorrichtung kann es sich um eine Verbindungseinrichtung zwischen mehreren Bauteilen, wie z.B. einer Montageschiene, einem Leuchteneinsatz und einem Reflektor, oder auch um einen Abschnitt eines Bauteils selbst, wie beispielsweise eines Leuchteneinsatzes, Reflektors oder einer Halterung für ein Leuchtmittel handeln. Des weiteren ist auch eine Leuchte oder ein Leuchteneinsatz denkbar, die bzw. der eine oder mehrere der vorherigen Beschreibung entsprechende Haltevorrichtungen umfaßt.

Erfindungsgemäß wird ferner ein System bereitgestellt, das zumindest eine im vorhergehenden beschriebene erfindungsgemäß Haltevorrichtung sowie zumindest ein Bauteil umfaßt, mit dem die Haltevorrichtung lösbar in Eingriff gebracht werden kann. Gemäß einer bevorzugten Ausführungsform sind die Haltevorrichtung und das Bauteil über eine Rastverbindung miteinander verbunden. Durch Herstellen der Rastverbindung können die Haltevorrichtung und ein Bauteil, wie beispielsweise eine Montageschiene lose miteinander verbunden werden, so daß die Haltevorrichtung und ein ggf. daran befestigtes weiteres Bauteil, wie z.B. ein Leuchteneinsatz nicht mehr gehalten werden müssen. Danach kann durch Betätigen des Steuerelements eine feste, endgültige Verbindung zwischen der Haltevorrichtung und dem Bauteil hergestellt werden, indem beispielsweise eines oder mehrere Halteelemente der Haltevorrichtung so eingestellt werden, daß sie mit der Montageschiene fest verspannt sind.

Vorzugsweise ist das Steuerelement so betätigbar, daß zumindest ein Halteelement der Haltevorrichtung zwischen einer vollständig verriegelten Position, in der die Haltevorrichtung mit dem Bauteil fest verbunden ist, einer halbverriegelten Position, in der die Haltevorrichtung und das Bauteil lose miteinander verbunden sind, und einer entriegelten Position, in der die Haltevorrichtung und das Bauteil voneinander getrennt sind, bewegt wird. Bei einem als Scheibe ausgebildeten Steuerelement werden die Positionen vorzugsweise durch Verstellen bzw. Drehen des Steuerelements eingestellt. Alternativ sind auch andere Konstruktionen von Steuerelementen denkbar.

Des weiteren wird ein Verfahren zum Verbinden einer erfindungsgemäßen Haltevorrichtung und eines Bauteils bereitgestellt, das die Schritte eines Einstellens des Steuerelements der Haltevorrichtung in eine halbverriegelte Position des Halteelements, eines Verbindens der Haltevorrichtung und des Bauteils und eines Verstellens des Steuerelements in eine vollständig verriegelte Position des Halteelements umfaßt. Das Einstellen des vorzugsweise als Scheibe ausgebildeten Steuerelements kann durch das Drehen der Scheibe bewirkt werden.

Gemäß einer weiteren Ausführungsform umfaßt das Verbinden der Haltevorrichtung und des Bauteils ein In-Eingriffbringen eines oder mehrere Rastelemente aufweisender Halteelemente der Haltevorrichtung mit zumindest einer entsprechend ausbildeten Einrichtung des Bauteils, wie z.B. einer Montageschiene durch Herstellen einer Rastverbindung.

Schließlich umfaßt das erfindungsgemäße Verfahren gemäß einer weiteren Ausfiihrungsform das Einstellen des Steuerelements der Haltevorrichtung in eine entriegelte Position des Halteelements und das Trennen der Haltevorrichtung und des Bauteils.

Weitere Vorteile, Eigenschaften und Merkmale der erfindungsgemäßen Vorrichtung sowie des erfindungsgemäßen Verfahrens ergeben sich aus der folgenden detaillierten Beschreibung einer beispielhaften Ausführungsform in Verbindung mit den beigefügten Zeichnungen. In den Figuren zeigt
- Fig. 1: eine Haltevorrichtung in Draufsicht gemäß einer Ausführungsform der vorliegenden Erfindung;
- Fig. 2: eine Haltevorrichtung der erfindungsgemäßen Haltevorrichtung aus Fig. 1 in einer Seitenansicht;
- Fig. 3: die in Fig. 1 und 2 gezeigte erfindungsgemäße Haltevorrichtung mit einem daran festgelegten Bauteil, wie z.B. einem Leuchteneinsatz, und ein mit der Haltevorrichtung, wie z.B. einer Montageschiene, verbindbares Bauteil im Querschnitt; zeigen
- Fig. 4a-7a: die Haltevorrichtung gemäß der in Fig. 1 gezeigten Ausführungsform in verschiedenen Positionen des Steuerelements in Draufsicht; und
- Fig. 4b-7b: die erfindungsgemäße Haltevorrichtung gemäß der in Fig. 1 und 2 gezeigten Ausführungsform mit verschiedenen den in Fig. 4a-7a entsprechenden Positionen des Steuerelements von der Seite.

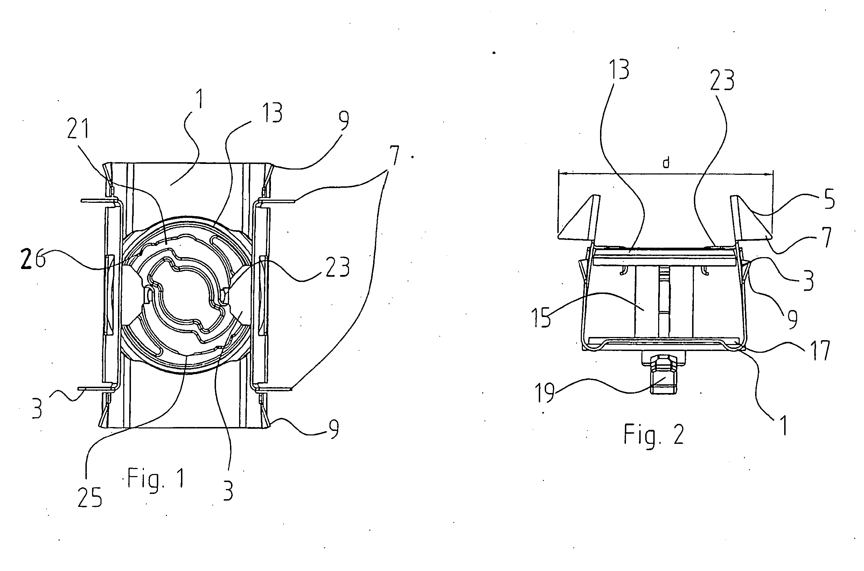

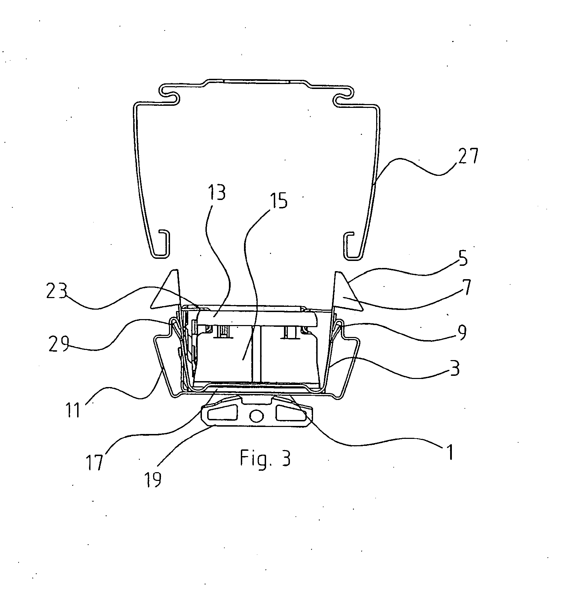

Die erfindungsgemäße Haltevorrichtung 1 wird im folgenden gemäß einer Ausführungsform anhand der Fig. 1 bis 3 beschrieben. Sie umfaßt ein U-förmiges Federelement 1, dessen Enden als Federschenkel ausgebildete Haltelemente 3 aufweisen. Die seitlichen Enden der Federschenkel umfassen mit Auflaufflächen 5 ausgebildete Rastelemente 7. In Längsrichtung der Haltevorrichtung 1 sind jeweils neben den Haltelementen 3 Rastnasen 9 zur Verbindung mit einem Tragrahmen eines Bauteils 11, wie z.B. eines in Fig. 3 im Querschnitt gezeigten Leuchteneinsatzes vorgesehen. Die Haltevorrichtung 1 ist mit den Halteelementen 3, Rastelementen 7 und Rastnasen 9 vorzugsweise aus einem Stück, beispielsweise aus einem Metallblech, hergestellt. Als Material eignen sich Metalle und Metalllegierungen, wie z.B. CrNi-Stahl, oder Kunststoffe, die dem Trägerelement 1 und insbesondere den als Federschenkel ausgebildeten Halteelementen 3 eine Elastizität oder Federkraft verleihen.

Mittig zwischen den Halteelementen 3 ist ein als Scheibe ausgebildetes Steuerelement 13 angeordnet. Das Steuerelement 13 ist über ein darunter angeordnetes Verbindungsteil 15 mit einer im zusammengesetzten Zustand auf dem Boden der Haltevorrichtung 1 zur Auflage kommenden Platte 17 verbunden. Von der Platte 17 erstreckt sich ein Vorsprung in eine (in den Figuren nicht zu erkennenden) mit der Drehachse des Steuerelements 13 konzentrisch ausgebildete Öffnung, in der die Platte und damit das Steuerelement drehbar gelagert ist. Auf der anderen Seite der Öffnung ist am Vorsprung ein Drehriegel 19 angeordnet, der einerseits als Drehhebel zur Verstellung der Position des Steuerelements 13 und andererseits als Befestigungseinrichtung für ein weiteres Bauteil an der Haltevorrichtung 1 dient.

Das Steuerelement 13, das Verbindungsteil 15, die mit dem Vorsprung versehene Platte 17 und der Drehriegel 19 sind vorzugsweise aus einem Stück hergestellt, wobei sich als Material insbesondere verschiedene Kunststoffe, wie beispielsweise ABS, PC und PS eigenen. Das Steuerelement 13 wird mit der Haltevorrichtung 1 durch Einsetzen in die Öffnung verbunden, wobei für den Durchgang des Drehriegels 19 im Boden der Haltevorrichtung 1 ein entsprechender Schlitz ausgebildet ist.

Das Steuerelement 13 weist in der Scheibe exzentrisch zur Drehachse ausgebildete Führungsschlitze 21 auf. Bei der gezeigten Ausführungsform sind insbesondere zwei bezüglich der Drehachse des Steuerelements 13 zueinander symmetrische und sich über einen Winkel von ca. 245° erstreckende spiralförmige Schlitze 21 ausgebildet. In jeden Schlitz 21 greift jeweils ein mit einem Halteelement 3 verbundener Führungsarm 23 ein. Die elastischen Halteelemente 3 sind vorzugsweise so hergestellt, daß sie durch die Führungsarme 23 mit einer bestimmten Vorspannung gegen den äußeren Rand des jeweiligen Führungsschlitzes 21 anliegen. Die radiale Position der Halteelemente 3 im Verhältnis zur Drehachse des Steuerelements 13 bzw. der Abstand d zwischen den Enden der Rastelemente 7 wird durch die Form der Führungsschlitze 21 und die Position des Steuerelements 13 relativ zu den Führungsarmen 23 bestimmt.

Im äußeren Rand der Führungsschlitze 21 sind des weiteren jeweils zwei durch Ausbuchtungen hergestellte Rastpositionen 25, 26 für die Halteelemente 3 vorgesehen. Die Abmessungen der Haltevorrichtung 1 und der davon umfaßten Teile sind entsprechend den Anforderungen, wie beispielsweise Gewicht und Form des Bauteils und den Abmessungen einer damit zu verbindenden Montageschiene 27, gewählt. Eine beispielhafte Haltevorrichtung 1 könnte ein Steuerelement 13 mit einer Scheibe mit einem Durchmesser von ca. 3cm und einem maximalen Abstand zwischen den Rastelementen 7 von ca. 6cm aufweisen.

In Fig. 3 ist die Haltevorrichtung mit einem daran festgelegten Bauteil 11, wie z.B. einem Leuchteneinsatz dargestellt. Zur Verbindung mit der Haltevorrichtung weist der Leuchteneinsatz eine längliche, dem Drehriegel 19 entsprechende Öffnung auf, durch die dieser steckbar ist. Beim Aufsetzen der Haltevorrichtung 1 auf das Bauteil 11 gleiten die Rastnasen 9 unter Verformung der Seitenwände des Mittelteils der Haltevorrichtung 1 über Innenkanten 29 des Profils des Bauteils 11 und hintergreifen diese, wobei die Haltevorrichtung 1 im Profil bzw. am Rahmen des Bauteils 11 verrastet.

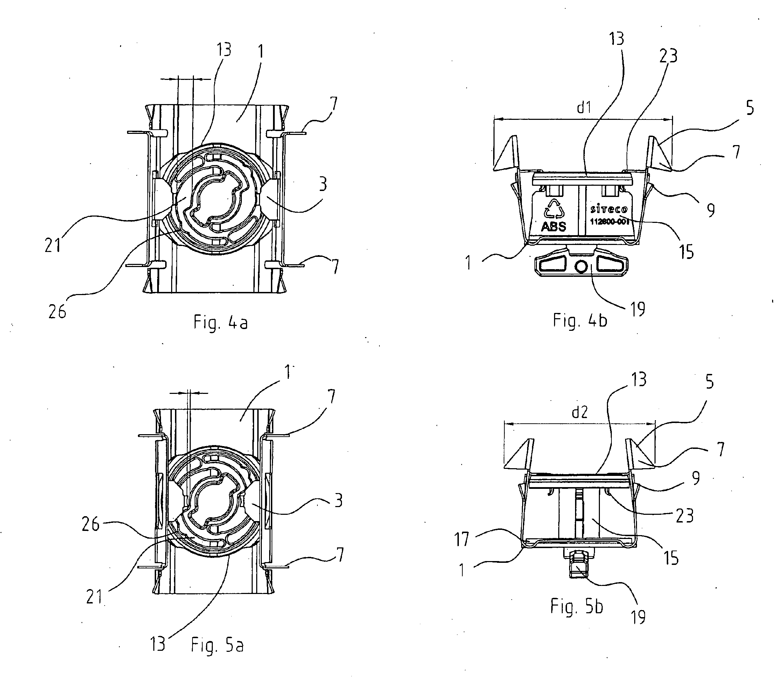

Die Funktionsweise der erfindungsgemäßen Vorrichtung wird im folgenden anhand der Fig. 4a-7b beschrieben. Fig. 4a und 4b zeigen die erfindungsgemäße Haltevorrichtung 1 in einer zum Einsetzen der Haltevorrichtung 1 in eine Montageschiene 27 vorgesehenen Stellung. Das Steuerelement 13 ist so eingestellt, daß die Halteelemente 3 und insbesondere die äußersten Enden der Rastelemente 7 einen etwa zwischen dem kleinstmöglichen und größten Abstand liegenden mittleren Abstand d₁ voneinander aufweisen. Diese Einstellposition ist beispielsweise auch in Fig. 3 zu erkennen. Längs der Führungsschlitze 21 befindet sich diese Position etwa in der Mitte zwischen deren Enden.

Ausgehend von dieser Position kann, wie in den Fig. 4a-7a zu erkennen ist, der Abstand zwischen den Führungsarmen 23 bzw. den Halteelementen 3 aus der in Fig. 4a gezeigten Position durch Drehen des Steuerelements 13 im Uhrzeigersinn vergrößert und durch Drehen entgegen dem Uhrzeigersinn verringert werden. Der der in Fig. 4a und 4b gezeigten Position entsprechende Abstand d₁ zwischen den Rastelementen 7 ist so gewählt, daß die Halteelemente 3 beim Drücken der Haltevorrichtung 1 in eine entsprechende mit Rändern (deren Abstand geringer ist, als der Abstand d₁ zwischen den Rastelementen 7) versehene Montageschiene 27 durch die an den Rändern anliegenden Auflaufflächen 5 zusammengedrückt werden, wie in Fig. 5a und 5b gezeigt ist, so daß der Abstand zwischen den Rastelementen auf eine Entfernung d₂ reduziert ist.

Da in der in Fig. 4a, 5a und 4b, 5b gezeigten Position des Steuerelements 13 die Führungsschlitze 21 verbreitert sind, können die Halteelemente 3 beim Drücken der Haltevorrichtung 1 in die Montageschiene 27 gebogen werden, wobei die Führungsarme 23 von den Führungsschlitzen 21 außer Eingriff gebracht werden, wie insbesondere in Fig. 5a dargestellt ist. Nachdem die Auflaufflächen 5 bei fortgesetzter Druckausübung die Ränder der Montageschiene 27 passiert haben, bewegen sich die Halteelemente 3 aufgrund der Federkraft des Materials, aus dem sie hergestellt sind, jeweils wieder nach außen, so daß eine Rastfläche jedes Rastelements 7 über dem Innenrand der Montageschiene 27 zu liegen kommt. Dabei können sich die Halteelemente 3 jedoch nur soweit nach außen bewegen, bis die Führungsarme 23 wieder in Eingriff mit den Führungsschlitzen 21 kommen.

Da eine weitere Bewegung der Führungsarme 23 und damit der Halteelemente 3 nach außen in dieser Stellung des Steuerelements 13 nicht möglich ist, ist in dieser Position des Steuerelements 13 der Abstand zwischen den Haltelementen 3 auf Höhe der Ränder der Montageschiene 27, d.h. am Ansatz der Rastelemente 7 geringer als der Abstand der Ränder der Montageschiene 27. Somit ist die Haltevorrichtung 1 immer noch relativ zur Montageschiene 27 bewegbar, wobei jedoch bei einer beispielsweise an der Decke montierten Montageschiene 27 ein Halten der Haltevorrichtung 1 aufgrund der hergestellten Rastverbindung nicht mehr erforderlich wäre. Ein weiterer Vorteil der erfindungsgemäßen Haltevorrichtung besteht, wie anhand der vorstehenden Beschreibung unmittelbar erkennbar ist, darin, daß die Haltevorrichtung 1 nach einem Verrasten mit der Montageschiene 27 selbst ohne oder mit einem beschädigten, beispielsweise gebrochenen Steuerelement 13, immer noch sicher mit der Montageschiene 27 verbunden ist und ein daran befestigtes Bauteil 11 nicht herunterfallen könnte.

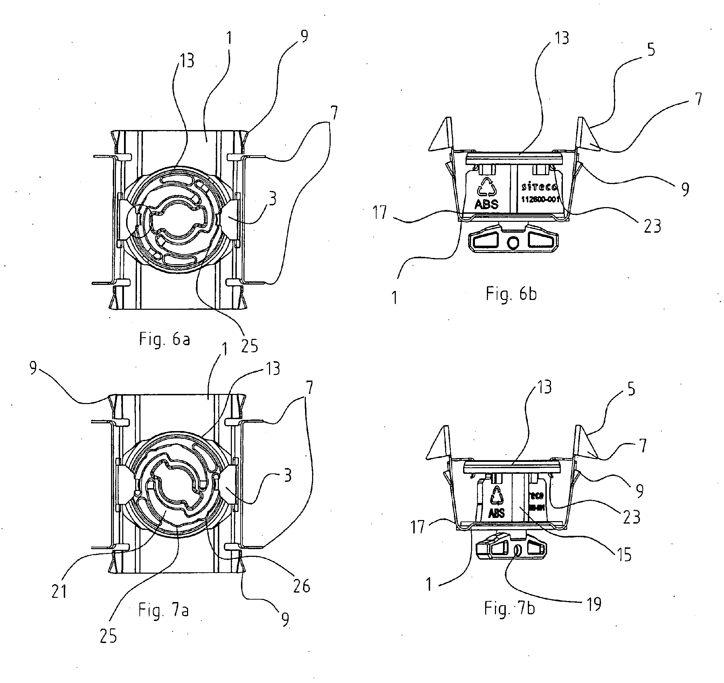

Nach Herstellung der Rastverbindung werden die Führungsarme 23 der Halteelemente 3 durch weiteres Drehen des Steuerelements 13 im Uhrzeigersinn (in den Figuren, d.h. bei Betrachtung von oben) in Bereiche der Führungsschlitze 21 versetzt, die eine geringere Breite aufweisen, als in der zur Herstellung der Rastverbindung vorgesehenen Position, wie in Fig. 6a zu erkennen ist. In dieser Position wird ein Zusammendrücken der Halteelemente 3 verhindert, so daß ein unbeabsichtigtes Lösen der Haltevorrichtung 1 von der Montageschiene 27 vermieden werden kann. Des weiteren ist an dieser Position im Schlitz 21 eine Rastposition 26 vorgesehen, die ein unbeabsichtigtes Verdrehen des Steuerelements 13 verhindert.

In der in Fig. 6a und 6b gezeigten Position ist der Drehriegel 19 entlang einer Verbindungslinie zwischen den Halteelementen 3 orientiert und es kann daran ein weiteres Bauteil, wie z.B. ein Reflektor, das eine dem Drehriegel 19 entsprechende Öffnung aufweist, angefügt werden. Dazu wird der Drehriegel 19 in die Öffnung am Bauteil eingesetzt wird und das Bauteil (nicht gezeigt) durch weiteres Drehen des Drehriegels 19 und des damit verbundenen Steuerelements 13 an der Haltevorrichtung 1 befestigt. An der gemäß der gezeigten Ausführungsform ausgebildeten Haltevorrichtung 1 können Bauteile mit unterschiedlicher Materialstärke im Bereich von 0,3-2 mm befestigt werden.

Bei dieser Drehung des Steuerelements 13 im Uhrzeigersinn werden auch die Halteelemente 3 bzw. die Rastelemente 7 aufgrund des dieser Drehung entsprechenden zunehmenden Radius des Führungsschlitzes 21 weiter nach außen und schließlich in eine vollständig verriegelte Position der Haltevorrichtung 1 mit der Montageschiene 27 bewegt, wie in Fig. 7 und 7b zu erkennen ist. Die Halteelemente 3 liegen jetzt an den Rändern der Montageschiene 27 an und sind damit verspannt.

Um die Haltevorrichtung 1 von der Montageschiene 27 zu trennen, wird das Steuerelement 13 im Gegenuhrzeigersinn so lange gedreht, bis die Führungsarme 23 die entgegengesetzten Enden der Führungsschlitze 21 erreichen. In dieser Position sind die Halteelemente 3 bzw. die Rastelemente 7 so weit angenähert, daß der Abstand zwischen den Rastelementen 7 geringer ist als der Abstand zwischen den Rändern der Montageschiene 27, so daß die Haltevorrichtung 1 von der Montageschiene 27 abgenommen werden kann. Ein Anbringen der Haltevorrichtung 1 an der Montageschiene 27 wäre offensichtlich auch ausgehend von dieser Position möglich. Jedoch kann dann eine Verbindung zwischen der Haltevorrichtung 1 und der Montageschiene 27 erst durch Drehen des Steuerelements 13 hergestellt werden und nicht durch eine einfache Realisierung einer Rastverbindung, wie oben beschrieben wurde.

Die beschriebene beispielhafte Haltevorrichtung 1 kann als Verbindungskomponente zwischen einer beispielsweise an einer Raumdecke befestigten Montageschiene 27 und Bauteilen 11, wie beispielsweise einem Leuchteneinsatz und einem Reflektor dienen. Bei der gezeigten Ausführungsform ist das Bauteil 11 auf die mit der Montageschiene 27 verbundene Haltevorrichtung 1 aufgerastet und ein weiteres nicht gezeigtes Bauteil kann mittels des Drehriegels 19 an der Haltevorrichtung 1 befestigt werden. Denkbar ist jedoch auch, eine oder mehrere Haltevorrichtungen selbst als Teil einer Leuchte oder eines Bauteils oder Leuchtenbauteils auszubilden. Des weiteren ist die Erfindung nicht auf eine Montageschiene und Rastelemente zur Herstellung einer Rastverbindung beschränkt und es können andere äquivalente Konstruktionen verwendet werden, ohne den Umfang der Erfindung zu verlassen. Auch bezüglich der Anordnung der Montageschiene und der Haltevorrichtung sind zahlreiche Kombinationen denkbar. Beispielsweise könnte die Montageschiene als Teil einer Leuchte, eines Leuchtenbauteils oder eines beliebigen anderen Bauteils ausgebildet sein, an dem ein mit der Haltevorrichtung versehenes Leuchtenbauteil oder sonstiges Bauteil befestigt wird. Des weiteren könnte es sich anstelle des Leuchteneinsatzes um ein anderes Bauteil, wie z.B. um einen Stromschieneneinsatz, einen Steckdoseneinsatz einen Blindeinsatz oder jedes andere geeignete Bauteil handeln. Auch anstelle der Montageschiene könnte beispielsweise eine Stromschiene oder ein anderes Bauteil verwendet werden.

Die Merkmale der in den Ansprüchen offenbarten Erfindung können für die Realisierung der Erfindung entweder alleine oder in jeder beliebigen Kombination von Bedeutung sein.

### Bezugszeichenliste

- 1: Haltevorrichtung
- 3: Halteelement
- 5: Auflauffläche
- 7: Rastelement
- 9: Rastnase
- 11: Bauteil
- 13: Steuerelement
- 15: Verbindungsteil
- 17: Platte
- 19: Drehriegel
- 21 1: Führungsschlitz
- 23: Führungsarm
- 25: Rastposition
- 26: Rastposition
- 27: Montageschiene
- 29: Innenkante

## Patentansprüche

1. Haltevorrichtung zur Befestigung von Bauelementen, umfassend:
- zumindest ein mit der Haltevorrichtung (1) verbundenes Halteelement (3); und
- ein mit dem Halteelement (3) zusammenwirkendes und relativ dazu bewegbares Steuerelement (13), welches so betätigt werden kann, daß das Halteelement (3) zwischen zumindest zwei Positionen verstellt wird, **dadurch gekennzeichnet, daß** das Steuerelement (13) zumindest eine Rastposition (26) für das Halteelement (3) oder das Halteelement (3) zumindest eine Rastposition für das Steuerelement (13) aufweist.

2. Haltevorrichtung nach Anspruch 1, **dadurch gekennzeichnet, daß** das Steuerelement (13) eine mit dem Halteelement (3) in Eingriff stehende Führungseinrichtung (21) aufweist, durch deren Form die Bewegung bzw. Position des Halteelements (3) gesteuert wird.

3. Haltevorrichtung nach Anspruch 1 oder 2, **dadurch gekennzeichnet, daß** das Steuerelement (13) eine relativ zum Halteelement (3) verstellbare Scheibe ist.

4. Haltevorrichtung nach einem der vorhergehenden Ansprüche, **dadurch gekennzeichnet, daß** das Steuerelement (13) drehbar an der Haltevorrichtung (1) befestigt ist und zumindest eine exzentrisch angeordnete als Führungsfläche oder Führungsschlitz ausgebildete Führungseinrichtung (21) aufweist, mit der das Halteelement (3) in Eingriff steht.

5. Haltevorrichtung nach Anspruch 4, **dadurch gekennzeichnet, daß** der Führungsschlitz (21) eine über seine Länge variierende Breite aufweist.

6. Haltevorrichtung nach einem der vorhergehenden Ansprüche, **dadurch gekennzeichnet, daß** das Halteelement (3) mit einer Feder beaufschlagt oder aus einem elastischen Material, insbesondere aus Metall oder einer Metalllegierung, hergestellt ist.

7. Haltevorrichtung nach einem der vorhergehenden Ansprüche, **dadurch gekennzeichnet, daß** das Halteelement (3) aus einem Stück mit der Haltevorrichtung (1) hergestellt ist.

8. Haltevorrichtung nach einem der vorhergehenden Ansprüche, **dadurch gekennzeichnet, daß** das Halteelement (3) einen mit dem Steuerelement (13) in Eingriff stehenden Führungsarm (23) aufweist.

9. Haltevorrichtung nach einem der vorhergehenden Ansprüche, **dadurch gekennzeichnet, daß** die Haltevorrichtung (1) ein U-förmiges Profil aufweist, dessen Arme jeweils ein als Federschenkel ausgebildetes Halteelement (3) aufweisen, wobei zwischen den Halteelementen das Steuerelement (13) angeordnet ist.

10. Haltevorrichtung nach einem der vorhergehenden Ansprüche, **dadurch gekennzeichnet, daß** sie mit einem Bauteil (11), insbesondere einem Leuchteneinsatz verbindbar ist, oder Teil eines Bauteils (11) ist.

11. Haltevorrichtung nach einem der vorhergehenden Ansprüche, **dadurch gekennzeichnet, daß** das Steuerelement (13) einen damit verbundenen Drehriegel (19) aufweist mit Hilfe dessen ein Bauteil an der Haltevorrichtung (1) befestigt werden kann.

12. Leuchte oder Leuchteneinsatz, die bzw. der eine gemäß einem der Ansprüche 1 bis 11 ausgebildete Haltevorrichtung (1) umfaßt.

13. System, umfassend eine Haltevorrichtung (1) nach einem der Ansprüche 1 bis 11 und zumindest ein Bauteil, mit dem die Haltevorrichtung (1) lösbar in Eingriff gebracht werden kann.

14. System nach Anspruch 13, **dadurch gekennzeichnet, daß** die Haltevorrichtung (1) und das Bauteil über eine Rastverbindung miteinander verbunden sind.

15. System nach Anspruch 14, **dadurch gekennzeichnet, daß** die Rastverbindung durch zumindest eine Innenkante des Bauteils (27) und zumindest ein damit in Eingriff bringbares, ein Rastelement (7) umfassendes Halteelement (3) gebildet wird.

16. System nach einem der Ansprüche 13 bis 15, **dadurch gekennzeichnet, daß** das Steuerelement (13) so betätigbar ist, daß zumindest ein Halteelement (3) der Haltevorrichtung (1) zwischen einer vollständig verriegelten Position, in der die Haltevorrichtung mit dem Bauteil (27) fest verbunden ist, einer halb verriegelten Position, in der die Haltevorrichtung (1) und das Bauteil (27) lose miteinander verbunden sind, und einer entriegelten Position bewegt wird, in der die Haltevorrichtung (1) und das Bauteil (27) voneinander getrennt sind.

17. Verfahren zum Verbinden einer Haltevorrichtung (1) gemäß einem der Ansprüche 1 bis 13 und eines Bauteils (27), umfassend die Schritte:
- Einstellen des Steuerelements (13) der Haltevorrichtung (1) in eine halb verriegelte Position des Halteelements (3), in der die Haltevorrichtung (1) über eine Rastverbindung mit dem Bauteil (27) verbunden ist;
- Verbinden der Haltevorrichtung (1) und des Bauteils (27); und
- Verstellen des Steuerelements (13) in eine vollständig verriegelte Position des Halteelements (1), in der die Haltevorrichtung (1) mit dem Bauteil (27) fest verbunden ist.

18. Verfahren nach Anspruch 17, **dadurch gekennzeichnet, daß** das Verbinden der Haltevorrichtung (1) und des Bauteils ein in Eingriff bringen eines oder mehrerer Halteelemente (3) der Haltevorrichtung (1) mit zumindest einer Innenkante des Bauteils (27) umfaßt.

19. Verfahren nach Anspruch 17 oder 18, **dadurch gekennzeichnet, daß** das Verbinden der Haltevorrichtung (1) und des Bauteils (27) das Herstellen einer Rastverbindung zwischen zumindest einem ein Rastelement (7) aufweisenden vorzugsweise flexiblen Halteelement (3) und der Innenkante des Bauteils (27) umfaßt.

20. Verfahren nach einem der Ansprüche 17 bis 19, **dadurch gekennzeichnet, daß** es das Verbinden eines weiteren Bauteils mit der Haltevorrichtung (1) umfaßt.

21. Verfahren nach einem der Ansprüche 17 bis 20, **dadurch gekennzeichnet, daß** es das Einstellen des Steuerelements (13) der Haltevorrichtung (1) in eine entriegelte Position des Halteelements (3) und das Trennen der Haltevorrichtung (1) und des Bauteils umfaßt.

## Claims

1. Holding device for fastening component parts, comprising:
- at least one holding element (3) connected to the holding device (1); and
- a control element (13) which interacts with the holding element (3) and which is movable relative thereto and which can be actuated such that the holding element (3) is adjusted between at least two positions, **characterised in that** the control element (13) has at least one locking position (26) for the holding element (3) or the holding element (3) has at least one locking position for the control element (13).

2. Holding device according to Claim 1, **characterised in that** the control element (13) has a guide apparatus (21) which engages with the holding element (3), and as a result of the shape of said guide apparatus (21) the movement or position of the holding element (3) is controlled.

3. Holding device according to Claim 1 or 2, **characterised in that** the control element (13) is a disc which is adjustable relative to the holding element (3).

4. Holding device according to one of the preceding claims, **characterised in that** the control element (13) is rotatably fastened on the holding device (1) and has at least one guide apparatus (21) which is arranged eccentrically and formed as a guide surface or guide slot and with which the holding element (3) engages.

5. Holding device according to Claim 4, **characterised in that** the guide slot (21) has a width which varies across its length.

6. Holding device according to one of the preceding claims, **characterised in that** the holding element (3) is acted upon by a spring and is produced from an elastic material, in particular metal or a metal alloy.

7. Holding device according to one of the preceding claims, **characterised in that** the holding element (3) is produced from one piece with the holding device (1).

8. Holding device according to one of the preceding claims, **characterised in that** the holding element (3) has a guide arm (23) which engages with the control element (13).

9. Holding device according to one of the preceding claims, **characterised in that** the holding device (1) has a U-shaped profile whose arms have in each case a holding element (3) formed as a spring leg, the control element (13) being arranged between the holding elements.

10. Holding device according to one of the preceding claims, **characterised in that** it can be connected to a component (11), in particular a lamp insert, or is part of a component (11).

11. Holding device according to one of the preceding claims, **characterised in that** the control element (13) has a spagnolet (19) connected thereto, with the help of which spagnolet (19) a component can be fastened on the holding device.

12. Lamp or lamp insert which comprises a holding device (1) formed according to one of Claims 1 to 11.

13. System comprising a holding device (1) according to one of Claims 1 to 11 and at least one component with which the holding device (1) can be brought detachably into engagement.

14. System according to Claim 13, **characterised in that** the holding device (1) and the component can be connected to one another via a locking connection.

15. System according to Claim 14, **characterised in that** the locking connection is formed by at least one inner edge of the component (27) and at least one holding element (3) which can be brought into engagement therewith and comprises a locking element (7).

16. System according to one of Claims 13 to 15, **characterised in that** the control element (13) can be actuated such that at least one holding element (3) of the holding device (1) is moved between a fully locked position, in which the holding device is fixedly connected to the component (27), a semi-locked position, in which the holding device (1) and the component (27) are loosely connected to one another, and an unlocked position, in which the holding device (1) and the component (27) are separated from one another.

17. Method for connecting a holding device (1) according to one of Claims 1 to 13 and a component (27), comprising the steps:
- Moving the control element (13) of the holding device (1) into a semi-locked position of the holding element (3) in which the holding device (1) is connected to the component (27) via a locking connection;
- Connecting the holding device (1) and the component (27); and
- Adjusting the control element (13) into a fully locked position of the holding element (1) in which the holding device (1) is fixedly connected to the component (27).

18. Method according to Claim 17, **characterised in that** the connection of the holding device (1) and of the component comprises a bringing into engagement of one or more holding elements (3) of the holding device (1) with at least one inner edge of the component (27).

19. Method according to Claim 17 or 18, **characterised in that** the connection of the holding device (1) and the component (27) comprises the production of a locking connection between at least one preferably flexible holding element (3) having a locking element (7) and the inner edge of the component (27).

20. Method according to one of Claims 17 to 19, **characterised in that** it comprises the connection of a further component to the holding device (1).

21. Method according to one of Claims 17 to 20, **characterised in that** it comprises the movement of the control element (13) of the holding device (1) into an unlocked position of the holding element (3) and the separation of the holding device (1) and of the component.

## Revendications

1. Dispositif de retenue pour la fixation d'éléments de construction, comprenant :
- au moins un élément de retenue (3) relié au dispositif de retenue (1) ; et
- un élément de commande (13) coopérant avec l'élément de retenue (3) et pouvant être déplacé par rapport à celui-ci, qui peut être actionné de telle sorte que l'élément de retenue (3) soit déplacé entre au moins deux positions, **caractérisé en ce que** l'élément de commande (13) présente au moins une position d'encliquetage (26) pour l'élément de retenue (3) ou l'élément de retenue (3) présente au moins une position d'encliquetage pour l'élément de commande (13).

2. Dispositif de retenue selon la revendication 1, **caractérisé en ce que** l'élément de commande (13) présente un dispositif de guidage (21) qui est en prise avec l'élément de retenue (3) et dont la forme commande le mouvement et la position de l'élément de retenue (3).

3. Dispositif de retenue selon la revendication 1 ou 2, **caractérisé en ce que** l'élément de commande (13) est un disque pouvant être déplacé par rapport à l'élément de retenue (3).

4. Dispositif de retenue selon l'une quelconque des revendications précédentes, **caractérisé en ce que** l'élément de commande (13) est fixé de façon rotative sur le dispositif de retenue (1) et présente au moins un dispositif de guidage (21) disposé de façon excentrée et conçue comme surface de guidage ou fente de guidage, avec lequel l'élément de retenue (3) est en prise.

5. Dispositif de retenue selon la revendication 4, **caractérisé en ce que** la fente de guidage (21) présente une largeur variant sur sa longueur.

6. Dispositif de retenue selon l'une quelconque des revendications précédentes, **caractérisé en ce que** l'élément de retenue (3) est sollicité avec un ressort ou est fabriqué dans un matériau élastique, en particulier dans du métal ou un alliage de métal.

7. Dispositif de retenue selon l'une quelconque des revendications précédentes, **caractérisé en ce que** l'élément de retenue (3) est fabriqué d'un seul tenant avec le dispositif de retenue (1).

8. Dispositif de retenue selon l'une quelconque des revendications précédentes, **caractérisé en ce que** l'élément de retenue (3) présente un bras de guidage (23) en prise avec l'élément de commande (13).

9. Dispositif de retenue selon l'une quelconque des revendications précédentes, **caractérisé en ce que** le dispositif de retenue (1) présente un profil en U, dont les bras présentent chacun un élément de retenue (3) conçu comme branche de ressort, l'élément de commande (13) étant disposé entre les éléments de retenue.

10. Dispositif de retenue selon l'une quelconque des revendications précédentes, **caractérisé en ce qu'**il peut être relié à un élément de construction (11), en particulier un bloc lumineux, ou fait partie d'un élément de construction (11).

11. Dispositif de retenue selon l'une quelconque des revendications précédentes, **caractérisé en ce que** l'élément de commande (13) présente un loquet tournant (19) relié à cet élément à l'aide duquel un élément de construction peut être fixé sur le dispositif de retenue (1).

12. Lampe ou bloc lumineux, laquelle ou lequel comporte un dispositif de retenue (1) conçu selon l'une quelconque des revendications 1 à 11.

13. Système, comprenant un dispositif de retenue (1) selon l'une quelconque des revendications 1 à 11 et au moins un élément de construction avec lequel le dispositif de retenue (1) peut être amené en prise de façon amovible.

14. Système selon la revendication 13, **caractérisé en ce que** le dispositif de retenue (1) et l'élément de construction sont reliés l'un à l'autre au moyen d'une liaison par encliquetage.

15. Système selon la revendication 14, **caractérisé en ce que** la liaison par encliquetage est formée par au moins une arête intérieure de l'élément de construction (27) et au moins un élément de retenue (3) pouvant être mis en prise avec celui-ci et comprenant un élément d'encliquetage (7).

16. Système selon l'une quelconque des revendications 13 à 15, **caractérisé en ce que** l'élément de commande (13) peut être actionné de telle sorte qu'au moins un élément de retenue (3) du dispositif de retenue (1) est déplacé entre une position complètement verrouillée, dans laquelle le dispositif de retenue est verrouillé fixement à l'élément de construction (27), une position semi-verrouillée, dans laquelle le dispositif de retenue (1) et l'élément de construction (27) sont reliés l'un à l'autre librement, et une position déverrouillée, dans laquelle le dispositif de retenue (1) et l'élément de construction (27) sont séparés l'un de l'autre.

17. Procédé pour relier un dispositif de retenue (1) selon l'une quelconque des revendications 1 à 13 et un élément de construction (27), comprenant les étapes suivantes :
- réglage de l'élément de commande (13) du dispositif de retenue (1) dans une position semi-verrouillée de l'élément de retenue (3), dans laquelle le dispositif de retenue (1) est relié à l'élément de construction (27) au moyen d'une liaison par encliquetage ;
- liaison du dispositif de retenue (1) et de l'élément de construction (27) ; et
- déplacement de l'élément de commande (13) dans une position complètement verrouillée de l'élément de retenue (1) dans laquelle le dispositif de retenue (1) est relié fixement à l'élément de construction (27).

18. Procédé selon la revendication 17, **caractérisé en ce que** la liaison du dispositif de retenue (1) et de l'élément de construction comprend une mise en prise d'un ou de plusieurs éléments de retenue (3) du dispositif de retenue (1) avec au moins une arête intérieure de l'élément de construction (27).

19. Procédé selon la revendication 17 ou 18, **caractérisé en ce que** la liaison du dispositif de retenue (1) et de l'élément de construction (27) comprend l'établissement d'une liaison par encliquetage entre au moins un élément de retenue (3) présentant un élément d'encliquetage (7) de préférence flexible et l'arête intérieure de l'élément de construction (27).

20. Procédé selon l'une quelconque des revendications 17 à 19, **caractérisé en ce qu'**il comporte la liaison d'un autre élément de construction avec le dispositif de retenue (1).

21. Procédé selon l'une quelconque des revendications 17 à 20, **caractérisé en ce qu'**il comporte le réglage de l'élément de commande (13) du dispositif de retenue (1) dans une position déverrouillée de l'élément de retenue (3) et la séparation du dispositif de retenue (1) et du composant.
